# EUROPEAN PATENT SPECIFICATION

(11) **EP 3 582 347 B1**
(45) Date of publication and mention of the grant of the patent: **05.08.2026**
(21) Application number: 18177487.8
(22) Date of filing: 13.06.2018
(51) Int. Cl.: H02B 11/04, H01R 13/631, H01R 13/187, H01R 13/17

(54) **ELECTRICAL SWITCHGEAR WITH AN ELECTRICAL CONNECTION ASSEMBLY**
ELEKTRISCHE SCHALTANLAGE MIT EINER ELEKTRISCHEN VERBINDUNGSANORDNUNG
APPAREIL DE COMMUTATION ÉLECTRIQUE AVEC UN ENSEMBLE DE CONNEXION ÉLECTRIQUE

(43) Date of publication of application: 18.12.2019
(73) Proprietor: ABB Schweiz AG, 5400 Baden (CH)
(72) Inventor: Cortinovis, Gianluca, 24021 Albino (BG) (IT); Morelli, Emanuele, 27010 Linarolo (PV) (IT)
(74) Representative: Giavarini, Francesco

(56) References cited:
- EP-A1- 2 398 120
- EP-A1- 3 240 001
- WO-A1-2014/071972
- WO-A1-96/23337
- CN-A- 102 290 264
- DE-A1- 19 701 295
- FR-B1- 2 864 688
- JP-U- H0 229 161
- US-A- 4 810 213

## Description

The present invention relates to an electrical connection assembly in an electrical switchgear, in particular to an electrical connection assembly in a low or medium voltage switchgear equipped with a withdrawable electrical switching apparatus, for instance a circuit breaker, which is movable between a disconnected position and a service position. For the purposes of the present invention, the term "low or medium voltage" is used to designate operating voltages up to some tens of kV AC. Although in the present disclosure reference will be primarily made to switchgears comprising a withdrawable circuit breaker, the technical solution disclosed herein is in general applicable also to switching devices other then circuit breakers.

It is known from the state of the art that electrical switchgears, in particular low and medium voltage switchgear, can be equipped with a switching device, usually a circuit breaker, that can be moved between a disconnected position and a service position. Electrical connection between the switching device and the switchgear takes place through a first set of connection terminals positioned on the movable switching device and a second set of stationary connection terminals - usually connection pins - positioned in the switchgear.

In such a case, the switching device is normally supported by a manual or motorized rack that can move from an extraction position with respect to the switchgear - in which the connection terminals of the switching device are disengaged from corresponding connection terminals of the switchgear - to an insertion position in the switchgear, in which the connection terminals of the switching device are electrically connected to the respective connection terminals of the switchgear.

Usually, the electrical connection between the stationary connection pins positioned in the switchgear and connection terminals of the switching device in the inserted, or "Racked-IN", position is made by sliding "tulip contacts" (also called "finger contacts" or "cluster contacts").

The tulip contacts assembly is normally fixed to connection terminals of the switching device and engages with the stationary connection terminals of the switchgear. However, in an alternative further possible embodiment, the tulip-contact-assembly can also be assembled on the stationary connection terminals of the switchgear in order to receive, and engage with, the movable connection terminals of the switching device.

In low and medium voltage switchgears, and in particular in Medium Voltage Air Insulated Switchgears coupled with withdrawable circuit breakers, one critical point is the connection between fixed connection terminals of the switchgear and the circuit breaker connection terminals, or contact arms.

During the operation of racking the withdrawable circuit breaker, the circuit breaker is racked inside the switchgear from a withdrawn "test" position to service position.

The design of the connection terminals of the switching device, and in particular of the tulip contact assembly, must be able to satisfy the electrical switchgear/circuit breaker characteristic (e.g. in terms of rated current, short circuit current) taking into account the available space, in order to respect the overall dimensions of the switchgear and to guarantee the dielectric performance of the whole system.

In order to guarantee the above-mentioned functions, the overall contact system, and in particular the tulip contact assembly, must provide a suitable contact force, a low electrical contact resistance and a good flexibility to compensate misalignments between the switchgear pins and circuit breaker contact arms axes.

Usually tulip contacts are composed of a plurality of Cu fingers, whose number depend on the geometry and the circuit breaker ratings. A number of springs are then normally required to guarantee an appropriate contact force the between tulip fingers, the contact arms of the circuit breaker and the fixed switchgear pins. Moreover, a supporting frame is normally required to keep together the whole assembly.

A first drawback of the existing contact solution solutions between the switching device and the switchgear based on tulip contact assemblies, is due to the sharp edges of the contact fingers and springs in the traditional tulip contact designs, which inherently represent electric field hotspots.

Furthermore, in some products, especially in switchgears requiring both a high dielectric withstand capability and compact dimensions, the geometry and compactness of connection between switchgear pin and CB is very important, and such compactness is not easy to achieve, particularly in case of switchgear applications with high rated currents and short-circuit currents.

Moreover, the tulip contact assemblies are relative complicated and expensive in terms of manufacturing and assembly, due to the relatively high number of components (finger elements, springs, and frames/fasteners) and complexity of assembly.

An example of an electrical withdrawable switchgear with a known contact assembly is given in WO 2014/0719 72 A1. Documents JP H 02 29161 U, EP 3 240 001 A1, and DE 197 01 295 A1 disclose contact assemblies for electrically connecting two stationary conductors.

On the basis of the above considerations, there is a need to have available technical solutions for an electrical connection assembly in an electrical switchgear that will enable the limits and the problems set forth above to be overcome.

Hence, the present disclosure is aimed at providing an electrical connection assembly in an electrical switchgear comprising a withdrawable switching device, which allows overcoming at least some of the above-mentioned shortcomings.

In particular, the present disclosure is aimed at providing an electrical connection assembly in an electrical switchgear comprising a withdrawable switching device, in which the problem of electric field hotspots is reduced with respect to the conventional systems.

Furthermore, the present disclosure is aimed at providing an electrical connection assembly in an electrical switchgear comprising a withdrawable switching device, which can be fitted in switchgears with reduced dimensions.

Moreover, the present disclosure is aimed at providing an electrical connection assembly in an electrical switchgear comprising a withdrawable switching device, which is adapted for use in switchgears requiring both a high dielectric withstand capability and compact dimensions.

In addition, the present disclosure is aimed at providing an electrical connection assembly in an electrical switchgear comprising a withdrawable switching device, in which the number of components parts is reduced.

Also, the present disclosure is aimed at providing an electrical connection assembly in an electrical switchgear comprising a withdrawable switching device, which has a compact structure with a reduced number of components, and which is reliable and relatively easy to produce at competitive costs.

Thus, the present disclosure relates to an electrical switchgear as defined in the appended claims.

In general, the electrical switchgear of the present disclosure comprises a circuit breaker which is movable between a disconnected, withdrawn, position and a connected, service, position, wherein said circuit breaker comprises, for each phase, a first connection terminal couplable to/uncouplable from a corresponding second, stationary, connection terminal of said switchgear, and further comprises an electrical connection assembly. In particular, the electrical connection assembly of the present disclosure is characterized in that it comprises a first contact element electrically and mechanically connected to said first connection terminal of said circuit breaker, a second contact element electrically and mechanically connected to said second, stationary, connection terminal of said switchgear, and a third, intermediate, contact element comprising a single-piece elongated body, that is electrically and mechanically connected with one of said first and second contact elements and that is electrically and mechanically couplable to/uncouplable from the other of said first and second contact elements. The electrical connection assembly of the present disclosure is also characterized in that said first and second contact elements respectively forms a first and a second contact pair with a portion of said third intermediate contact element, each of said first and second contact pair having a male contact element and a female contact element having a hollow cavity into which said male element is instertable and having sliding contacts positioned at the interface between said male and female contact elements, the external surface of said female contact element having linear and curved portions devoid of any sharp edge and and having sliding contacts positioned at the interface between said male and female contact elements, the external surface of said female contact element having linear and curved portions devoid of any sharp edge and being symmetrical with respect to a central longitudinal axis.

For the purposes of the present invention, the term "devoid of any sharp edge" indicates that on the surface there are no angles of lower than about 90°. Moreover, the term "circuit breakers" is meant to include any switching device usable in a withdrawable manner in an electrical switchgear.

As better explained in the following description, thanks to the innovative structure of the electrical connection assembly in an electrical switchgear of the present invention - in which said assembly comprises three contact elements suitably shaped and positioned - the above-mentioned problems can be avoided, or at least greatly reduced.

Indeed, the proposed solution allows to carry higher rated currents and short-circuit currents in smaller external dimensions compared to traditional solutions. One of the reason is the significantly higher number of sliding contact points with respect to the conventional tulip contact systems that allow a smaller contact resistance. In practice, by suitably choosing the sliding contacts system, it is possible to have a higher contact point density along the circumference compared to the finger contacts of the tulip systems.

Moreover, in the presently disclosed electrical connection assembly, the external surface of the bulkier contact element without sharp edges (i.e. the female contact element) solves the problem of electric field concentration around sharp hotspots. Therefore the inherent insulating performance is improved compared to traditional solution (better BIL and power-frequency performance, lower risk of partial discharge).

It is also worth noting that, while the conventional tulip contact assemblies are made of a relatively high number of components (in the traditional tulip contacts more than ten finger elements, a number of springs, and one or more fasteners/frames), in the presently disclosed solution there basically only three contact elements

As better explained in the following description, in a typical embodiment of an electrical connection assembly in an electrical switchgear according to the present disclosure, said male contact element comprises a cylindrical body and said female contact element comprises a cylindrical hollow cavity into which said cylindrical body is insertable.

Preferably, in order to position and keep into place the sliding contacts, the hollow cavity of said female contact element comprises one or more slots on its internal surface into which said sliding contacts are positioned.

Alternatively, the sliding contacts can be positioned on the male element. In such a case, said male contact element comprises one or more slots on its external surface into which said sliding contacts are positioned and can be kept into place.

Normally it is sufficient to have just one sliding contact system for each contact pair. However, the number of sliding contact can be increased according to the needs. In such a case, for each contact pair, said male contact element and/or said female contact element can conveniently comprise a plurality of slots into which a corresponding plurality of sliding contacts are positioned.

In particular, in an exemplary embodiment of an electrical connection assembly in an electrical switchgear, according to the present disclosure, said third, intermediate, contact element can advantageously comprise a single-piece elongated sleeve which is made of a conductive material and is provided with a cylindrical hollow cavity. Then, each of said first and second contact elements can advantageously comprise a cylindrical body which is insertable in said cylindrical cavity, said first contact pair being formed by said third, intermediate, contact element and the cylindrical body of said first contact element at a first end of said single-piece elongated sleeve, said second contact pair being formed by said third, intermediate, contact element and the cylindrical body of said second contact element at a second end of said single-piece elongated sleeve.

In a further alternative embodiment of an electrical connection assembly in an electrical switchgear, according to the present disclosure, said third, intermediate, contact element can advantageously comprise a single-piece elongated cylindrical body. Then each of said first and second contact elements can advantageously comprise a female contact element having a hollow cavity into which a portion of said single-piece elongated cylindrical body, said first contact pair being formed by said third, intermediate, contact element and the female contact element of said first contact element at a first end of said single-piece elongated cylindrical body, said second contact pair being formed by said third, intermediate, contact element and the female contact element of said second contact element at a second end of said single-piece elongated cylindrical body.

A mixed solution in which the third, intermediate, contact element is made as a single-piece element forming a male element on one end and a female element on the other end thereof, and which is couplable with corresponding female/male elements of the first/second contact elements, is also possible

In a typical embodiment of the presently disclosed electrical connection assembly, in an electrical switchgear said third, intermediate, contact element is electrically and mechanically connected with said first contact element and is electrically and mechanically couplable to/uncouplable from said second contact element. In practice, according to this embodiment, the third, intermediate, contact element is preferably fixed to the contact elements of the circuit breaker and follows said circuit breaker during its movements between the withdrawn position and the inserted position.

In a further exemplary embodiment of an electrical connection assembly, said third, intermediate, contact element is preferably adapted to slightly bend with respect to said longitudinal axis, so as to compensate possible misalignment between said first and second contact elements.

The desired degree of adaptability can be achieved by a proper dimensioning of the slots housing the sliding contacts. For instance, the maximum permissible misalignment in mm between the two axes of the first contact element (circuit breaker contact arms) and the second contact element (Switchgear Pin) increases by increasing the distance between the two sliding contacts (while keeping constant the maximum angular misalignment).

Still in a further exemplary embodiment of an electrical connection assembly, said sliding contacts are preferably compressible in a direction perpendicular to said longitudinal axis to compensate possible misalignment between said first and second contact elements. Also in this case, thanks to the flexibility of the sliding contact perpendicularly to the longitudinal axis, this solution allows to ensure a good electrical connection between the switchgear connection terminals and the circuit breaker connection terminals even in case of misalignment between the axes thereof.

Various kinds of sliding contacts can be used in electrical connection assembly, provided that the required performances are guaranteed. For example, said sliding contacts can be conveniently Baumann contact springs or Multi-Contact bands.

In order to increase the dielectric and thermal performances, in case of need it is possible to apply an insulating painting or coating on the external surface of the female element. This provides an additional improvement of insulation level and better heat exchange capability (higher infrared radiation emissivity compared to bare metals).

Further features and advantages of the present invention will be more clear from the description of preferred but not exclusive embodiments of an electrical connection assembly in an electrical switchgear according to the present invention, shown by way of examples in the accompanying drawings, wherein:
- Figure 1 is a side view of an electrical switchgear with a circuit breaker in a disconnected, withdrawn, position;
- Figure 2 is a side view of an electrical switchgear with a circuit breaker in a connected, service, position;
- Figure 3 is a schematic view of a first exemplary embodiment of an electrical connection assembly, according to the invention, in a first position;
- Figure 4 is a schematic view of a first exemplary embodiment of an electrical connection assembly, according to the invention, in a second position;
- Figure 5 is a schematic view of a first exemplary embodiment of an electrical connection assembly, according to the invention, in a third position;
- Figure 6 is a view of a component of a first exemplary embodiment of an electrical connection assembly, according to the invention;
- Figure 7 is a schematic view of a second exemplary embodiment of an electrical connection assembly, according to the invention, in a first position;
- Figure 8 is a schematic view of a third exemplary embodiment of an electrical connection assembly, according to the invention, in a first position.

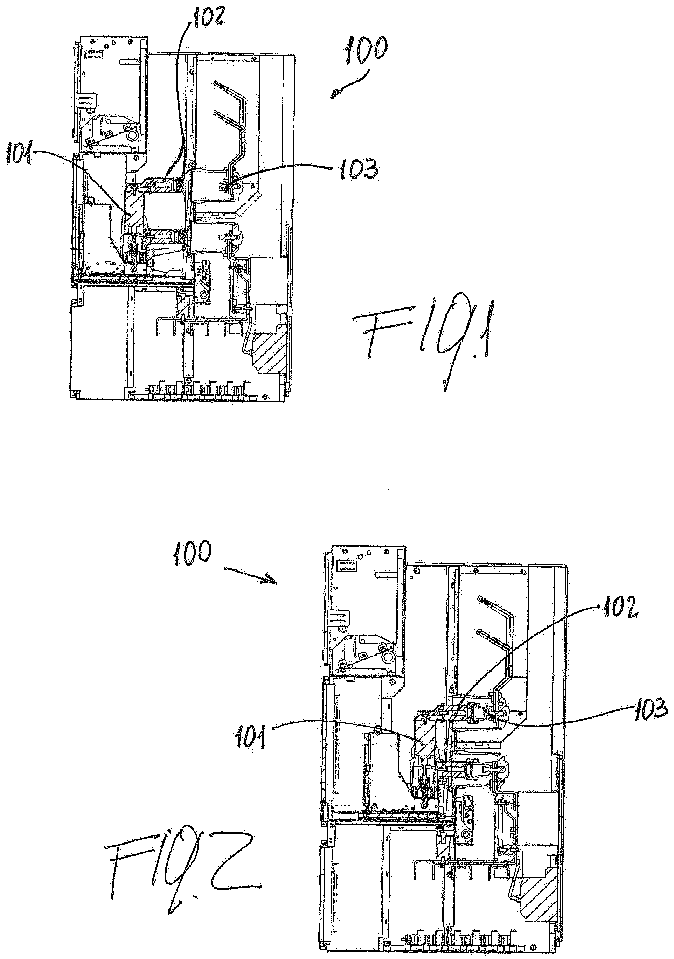

With reference to the attached figures 1 and 2, an electrical switchgear 100 normally comprises a circuit breaker 101 which is movable between a disconnected, withdrawn, position - shown in figure 1 - and a connected, service, position - shown in figure 2 - according to well-known embodiments that will not be described in further details.

In order to achieve the electrical connection with the switchgear 100, said circuit breaker 101 normally comprises, for each phase, a first connection terminal 102 (circuit breaker contact arm), which is couplable to and uncouplable from a corresponding second, stationary, connection terminal 103 (switchgear contact pin) of said switchgear 100, typically on both line and load side.

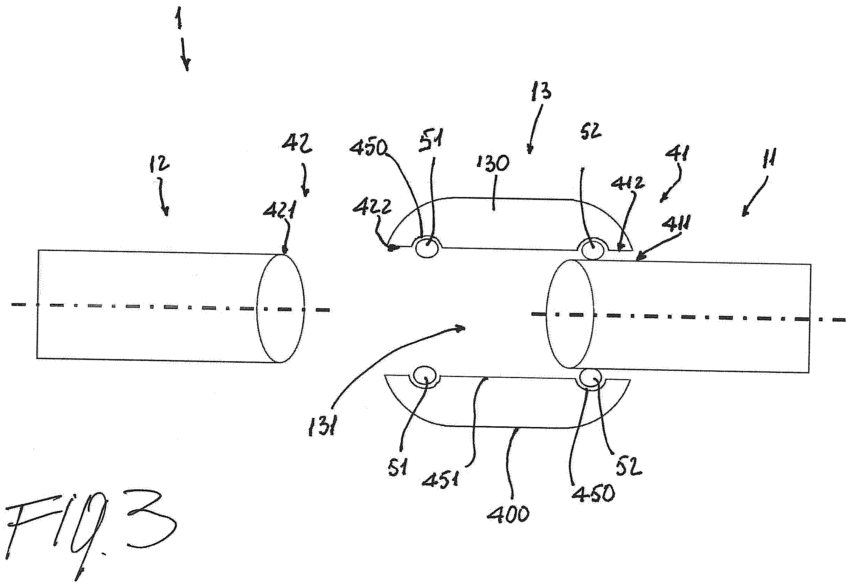

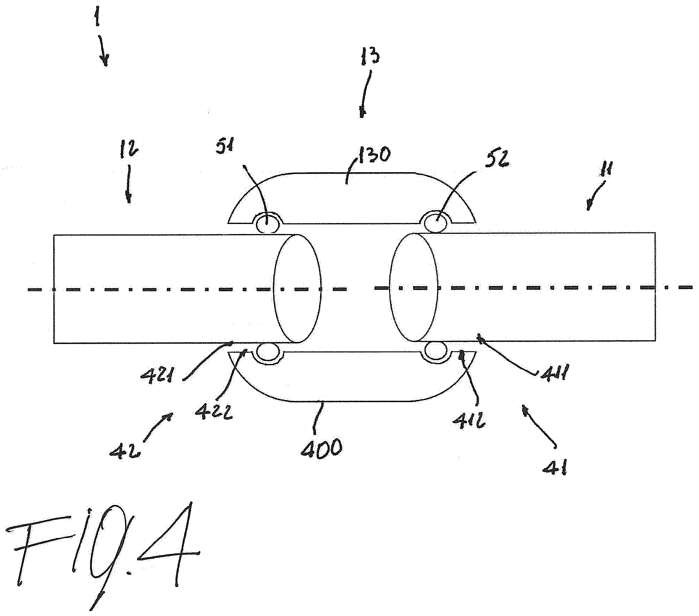

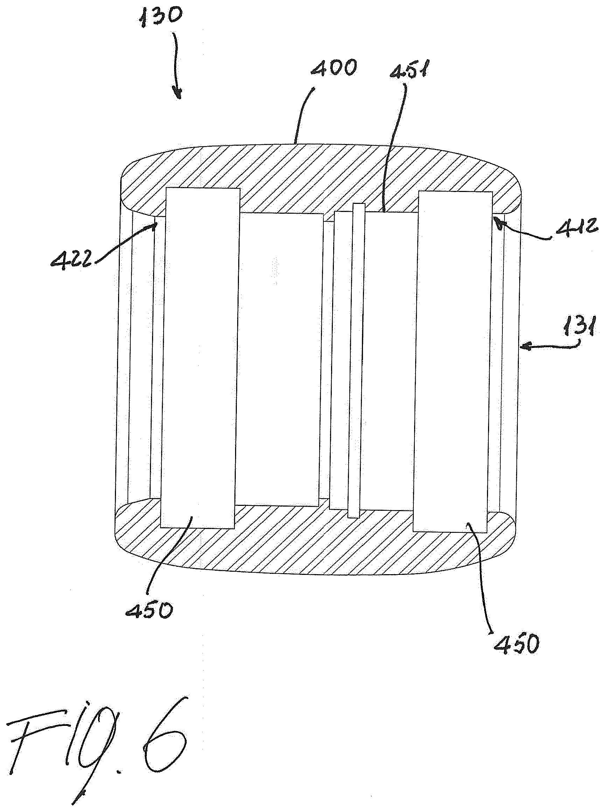

With reference to the attached figures 3-8, one of the distinguishing features of the switchgear 100 of the present invention is given by the fact that the electrical connection assembly, designated by the reference numerals 1, 10, 20, in its more general definition comprises a first contact element 11, 21 which is electrically and mechanically connected - for example - to the first connection terminal 102 of said circuit breaker 101, and a second contact element 12, 22 which in turn is electrically and mechanically connected to the second, stationary, connection terminal 103 of said switchgear 100. The electrical connection assembly 1, 10, 20 then comprises a third, intermediate, contact element 13, 23, 33 that is electrically and mechanically connected with one of said first 11, 21 and second 12, 22 contact elements and that is electrically and mechanically couplable to/uncouplable from the other of said first 11, 21 and second 12, 22 contact elements

In practice, in the switchgear 100 according to the invention, the third, intermediate, contact element 13, 23, 33 that carries out the electrical connection of the insertion points, can be fixed on either the moving connection terminals 102 of the circuit breaker 101 or on the stationary connection terminals 103 of the switchgear 100.

Thus, the electrical connection assembly 1, 10, 20 of the switchgear 100 of the present invention, can be considered as formed by two contact pairs 41, 42. The first contact element 11, 21 forms a first contact pair 41 with a first portion of said third, intermediate, contact element 13, 23, 33 and similarly the second contact element 12, 22 forms a second contact pair 42 with a second portion of said third, intermediate, contact element 13, 23, 33.

The mechanical and electrical connection in each contact pair 41, and 42 is conveniently achieved with a male/female coupling. In practice, each of said first 41 and second 42 contact pair has a male contact element 411, 421 and a female contact element 412, 422 having a hollow cavity into which said male element 411, 421 is instertable, according to exemplary embodiments better disclosed hereinafter.

A further distinguishing features of the switchgear 100 of the present invention is given by the fact that a number of sliding contacts 51, 52, 53, 5 are positioned at the interface between the male 411, 421 and female 412, 422 contact elements, thereby providing a contact interface having a higher number of sliding contact points with respect to the conventional tulip contact systems.

Furthermore, the external surface 400 of said female contact element 412, 422, is conveniently symmetrical with respect to a central longitudinal axis and is suitably shaped so as to have linear and curved portions which are devoid of any sharp edge. The presence of sharp hotspots and the consequent problem of field concentration around said sharp hotspots are therefore greatly reduced.

Typically, the male contact element 411, 421 of the first and second contact pairs 41, 42 can be conveniently made as a cylindrical body (therefore very easy to manufacture) and the corresponding female contact element 412, 422 can be conveniently made as a cylindrical hollow cavity into which said cylindrical body is insertable (and therefore likewise very easy to manufacture).

In the embodiment of an electrical connection assembly 1, 10 shown in figure 3-7, the hollow cavity of said female contact element 412, 422 conveniently comprises one or more slots 450 which are formed on its internal surface 451. The sliding contacts 51, 52, 53, 54 are then positioned in said slots 450 and kept in place during the sliding connection/disconnection movement of male contact element 411, 421 inside the hollow cavity.

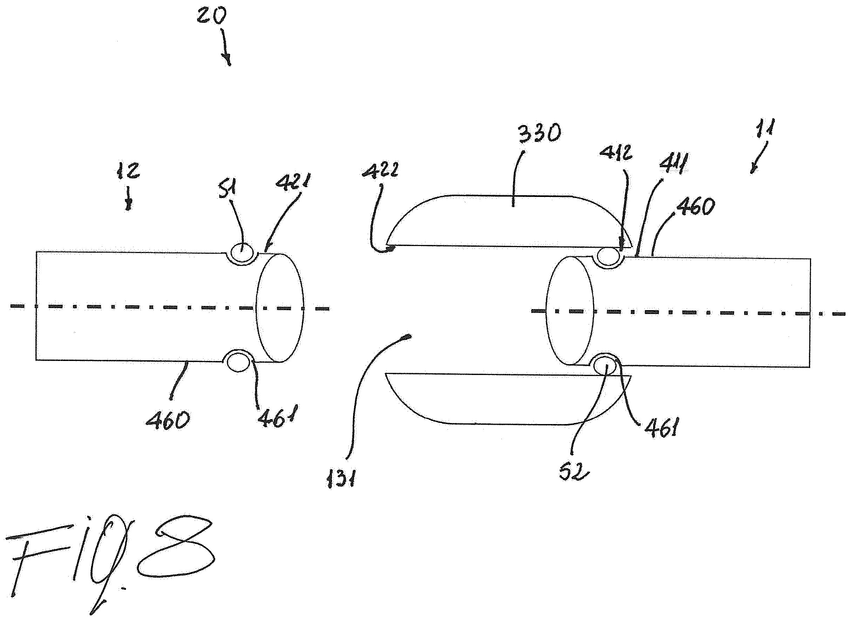

Alternatively, as shown in figure 8, the sliding contacts 51, 52, 53, 54 can be positioned on the male contact side of the connection pairs 41 and 42. In such a case, the male contact element 411, 421 conveniently comprises one or more slots 461 which are formed on its external surface 460, said sliding contacts 51, 52, 53, 54 being the positioned and kept in place into said slots 461.

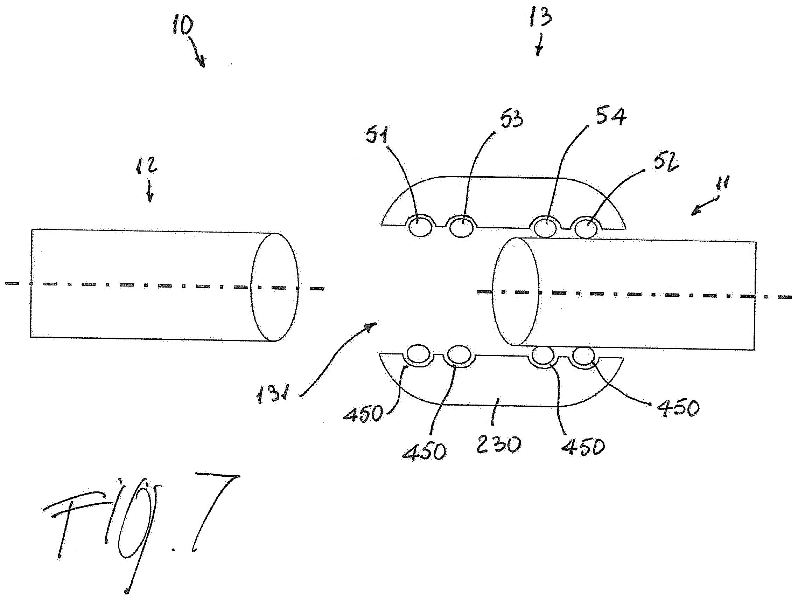

As shown in the embodiment of figure 7, if it is desired to increase the contact density at the contact interface between the various contact elements, it is possible, for each contact pair 41, 42, to provide said male contact element 411, 421 and/or said female contact element 412, 422 with a plurality of slots 450 into which a corresponding plurality of sliding contacts 51, 52, 53, 54 are conveniently positioned.

As shown in figures 3-8, said third, intermediate, contact element 13, 23, 33 comprises a single-piece elongated body.

In particular, with reference to figures 3-8, the third, intermediate, contact element 13, 23, 33 conveniently comprises a single-piece elongated sleeve 130, 230, 330 which is made of a conductive material having a cylindrical hollow cavity 131, 231, 331. In turn, each of said first 11, 21 and second 12, 22 contact elements conveniently comprises a cylindrical body which is insertable in said cylindrical cavity 130, 230, 330.

Thus, the first contact pair 41 is formed by said third, intermediate, contact element 13, 23, 33 and by the cylindrical body of said first contact element 11, 21 at a first end of said single-piece elongated sleeve 130, 230, 330, while said second contact pair 42 is formed by said third, intermediate, contact element 13, 23, 33 and the cylindrical body of said second contact element 12, 22 at a second end of said single-piece elongated sleeve 130, 230, 330, on the opposite side of said single-piece elongated sleeve 130, 230, 330.

In an alternative embodiment of an electrical connection assembly 1, 10, 100, not illustrated in details, said third, intermediate, contact element comprises a single-piece elongated cylindrical body, while each of said first and second contact elements comprises a female contact element having a hollow cavity into which a portion of said single-piece elongated cylindrical body, thereby realizing a contact configuration which is opposite with respect to the one previously described.

In practice, in this embodiment the first contact pair is therefore formed by said third, intermediate, contact element and the female contact element of said first contact element at a first end of said single-piece elongated cylindrical body, while said second contact pair is likewise formed by said third, intermediate, contact element and the female contact element of said second contact element at a second end of said single-piece elongated cylindrical body, on the opposite side said single-piece elongated cylindrical body.

In a typical embodiment of an electrical connection assembly 1, 10, 20 in an electrical switchgear 100, according to the present disclosure, the third, intermediate, contact element 13, 23, 33 is electrically and mechanically connected with said first contact element 11, 21, in turn connected to the circuit breaker 101, and is electrically and mechanically couplable to/uncouplable from said second contact element 12, 22, in turn connected to the second, stationary, connection terminal 103 of said switchgear 100.

In other words, the third, intermediate, contact element 13, 23, 33, i.e. the single-piece elongated sleeve 130, 230, 330 that carries out the electrical connection of the insertion points, in the embodiments illustrated is fixed on the moving connection terminals 102 of the circuit breaker 101, thereby following it during the rack-in and rack-out operation. The opposite configuration, in which the sleeve 130, 230, 330 is fixed on the second, stationary, connection terminal 103 of the switchgear 100 is however also possible.

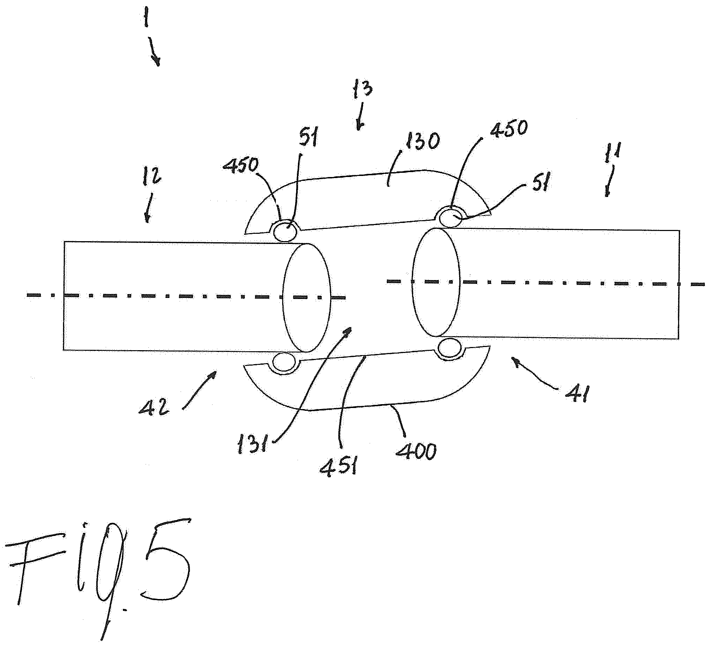

As shown in figure 5, the structure of the electrical connection assembly 1, 10, 20 presently disclosed allows compensating possible misalignments between the circuit breaker terminals 102 and the switchgear terminals 103.

In practice, the third, intermediate, contact element 13, 23, 33 is adapted to slightly bend with respect to its longitudinal axis thereby assuming an inclined orientation with respect to the insertion/extraction direction an making possible a compensation of any misalignment between said first 11, 21 and second 12, 22 contact elements.

Such compensation is also possible by using sliding contacts 51, 52, 53, 54 with elastic characteristics and which are compressible in a direction perpendicular to said longitudinal axis, for instance Baumann contact springs

Alternatively the sliding contacts 51, 52, 53, 54 Multi-Contact bands or any other kind of sliding contact system which is able to guarantee the required performance.

As previously said, when desired, it is possible to increase the dielectric and thermal performances of the electrical connection assembly 1, 10, 20 by applying an insulating painting or coating on the external surface 452 of the female element 412, 422, thereby improvement the insulation level and enhancing the heat exchange capability of the electrical connection assembly 1, 10, 20.

It is clear from the above that the presently disclosed electrical connection assembly 1, 10, 20 in an electrical switchgear 100 fully solves the technical problems underlined above.

Indeed, despite the extreme compactness of the design compared to traditional tulip contact, the high contact point density of the sliding contact elements ensures a good current carrying capability and low contact resistance. Moreover, the particular design of the various contact elements, allows minimizing the electric field stress compared to tulip contact solution allowing a better design/product robustness.

Moreover, in high rating circuit breakers (like >3000A rated current) or high short circuit current (like >50kA), the presently disclosed solution increasing current carrying performances, keeping at the same time low overall dimensions and therefore low phase-to-phase dielectric stress.

Also, in particular case, where a traditional tulip design would require a complex shielding of the insulating bushing in order to eliminate dielectric hotspots on sharp edges, the dielectric robustness of this solution can allow a lower bushing shielding complexity and good current carrying capability in a compact design.

## Claims

1. An electrical switchgear (100) comprising a circuit breaker (101) movable between a disconnected, withdrawn, position and a connected, service, position, wherein said circuit breaker (101) comprises, for each phase, a first connection terminal (102) couplable to/uncouplable from a corresponding second, stationary, connection terminal (103) of said switchgear (100), the electrical switchgear further comprising an electrical connection assembly (1, 10, 20) which comprises a first contact element (11, 21) electrically and mechanically connected to said first connection terminal (102) of said circuit breaker (101), a second contact element (12, 22) electrically and mechanically connected to said second, stationary, connection terminal (103) of said switchgear (100), and a third, intermediate, contact element (13, 23, 33), **characterized in that** the third, intermediate, contact element (13, 23, 33) comprises a single-piece elongated body, that is electrically and mechanically connected with one of said first (11, 21) and second (12, 22) contact elements and that is electrically and mechanically couplable to/uncouplable from the other of said first (11, 21) and second (12, 22) contact elements, and further **characterized in that** said first (11, 21) and second (12, 22) contact elements respectively forms a first (41) and a second (42) contact pair with a portion of said third, intermediate, contact element (13, 23, 33), each of said first (41) and second (42) contact pairs having a male contact element (411, 421) and a female contact element (412, 422) having a hollow cavity into which said male element (411, 421) is insertable, and having sliding contacts (51, 52, 53, 54) positioned at the interface between said male (411, 421) and female (412, 422) contact elements, the external surface (400) of said female contact element (412, 422) having linear and curved portions devoid of any sharp edge and being symmetrical with respect to a central longitudinal axis.

2. An electrical switchgear (100), according to claim 1, **characterized in that** said male contact element (411, 421) comprises a cylindrical body and said female contact element (412, 422) comprises a cylindrical hollow cavity into which said cylindrical body is insertable.

3. An electrical switchgear (100), according to claim 1 or 2, **characterized in that** said hollow cavity of said female contact element (412, 422) comprises one or more slots (450) on its internal surface (451) into which said sliding contacts (51, 52, 53, 54) are positioned.

4. An electrical switchgear (100), according to one or more of the previous claims, **characterized in that** said male contact element (411, 421) comprises one or more slots (461) on its external surface (460) into which said sliding contacts (51, 52, 53, 54) are positioned.

5. An electrical switchgear (100), according to claim 3 or 4, **characterized in that**, for each contact pair (41, 42) said male contact element (411, 421) and/or said female contact element (412, 422) comprises a plurality of slots (450) into which a corresponding plurality of sliding contacts (51, 52, 53, 54) are positioned.

6. An electrical switchgear (100), according to one or more of the previous claims, **characterized in that** said third, intermediate, contact element (13, 23, 33) comprises a single-piece elongated sleeve (130, 230, 330) made of conductive material having a cylindrical hollow cavity (131, 231, 331), and **in that** each of said first (11, 21) and second (12, 22) contact elements comprises a cylindrical body insertable in said cylindrical cavity (130, 230, 330), said first contact pair (41) being formed by said third, intermediate, contact element (13, 23, 33) and the cylindrical body of said first contact element (11, 21) at a first end of said single-piece elongated sleeve (130, 230, 330), said second contact pair (42) being formed by said third, intermediate, contact element (13, 23, 33) and the cylindrical body of said second contact element (12, 22) at a second end of said single-piece elongated sleeve (130, 230, 330).

7. An electrical switchgear (100), according to one or more of claims 1-5, **characterized in that** said third, intermediate, contact element comprises a single-piece elongated cylindrical body, and **in that** each of said first and second contact elements comprises a female contact element having a hollow cavity into which a portion of said single-piece elongated cylindrical body is insertable, said first contact pair (41) being formed by said third, intermediate, contact element and the female contact element of said first contact element at a first end of said single-piece elongated cylindrical body, said second contact pair (42) being formed by said third, intermediate, contact element and the female contact element of said second contact element at a second end of said single-piece elongated cylindrical body.

8. An electrical switchgear (100), according to one or more of the previous claims, **characterized in that** said third, intermediate, contact element (13, 23, 33) is adapted to slightly bend with respect to said longitudinal axis to compensate possible misalignment between said first (11, 21) and second (12, 22) contact elements.

9. An electrical switchgear (100), according to one or more of the previous claims, **characterized in that** said sliding contacts (51, 52, 53, 54) are compressible in a direction perpendicular to said longitudinal axis to compensate possible misalignment between said first (11, 21) and second (12, 22) contact elements.

10. An electrical switchgear (100), according to one or more of the previous claims, **characterized in that** said sliding contacts (51, 52, 53, 54) are Baumann contact springs or Multi-Contact bands.

11. An electrical switchgear (100), according to one or more of the previous claims, **characterized in that** the external surface (400) of said female element (412, 422) is coated with an insulated coating.

## Patentansprüche

1. Elektrische Schaltanlage (100), die einen Leistungsschalter (101) umfasst, der zwischen einer getrennten, zurückgezogenen Position und einer verbundenen Betriebsposition beweglich ist, wobei der Leistungsschalter (101) für jede Phase einen ersten Verbindungsanschluss (102) umfasst, der mit/von einem entsprechenden zweiten, stationären Verbindungsanschluss (103) der Schaltanlage (100) koppelbar/entkoppelbar ist, wobei die elektrische Schaltanlage ferner Folgendes umfasst
eine elektrische Verbindungsanordnung (1, 10, 20), die ein erstes Kontaktelement (11, 21), das elektrisch und mechanisch mit dem ersten Verbindungsanschluss (102) des Leistungsschalters (101) verbunden ist, ein zweites Kontaktelement (12, 22), das elektrisch und mechanisch mit dem zweiten, stationären Verbindungsanschluss (103) der Schaltanlage (100) verbunden ist, und ein drittes, dazwischenliegendes Kontaktelement (13, 23, 33) umfasst, **dadurch gekennzeichnet, dass** das dritte, dazwischenliegende Kontaktelement (13, 23, 33) Folgendes umfasst
einen einteiligen länglichen Körper, der elektrisch und mechanisch mit einem des ersten (11, 21) und des zweiten (12, 22) Kontaktelements verbunden ist und der elektrisch und mechanisch mit/von dem anderen des ersten (11, 21) und des zweiten (12, 22) Kontaktelements koppelbar/entkoppelbar ist, und ferner **dadurch gekennzeichnet, dass** das erste (11, 21) und das zweite (12, 22) Kontaktelement jeweils ein erstes (41) und ein zweites (42) Kontaktpaar mit einem Abschnitt des dritten, dazwischenliegenden Kontaktelements (13, 23, 33) bilden, wobei jedes des ersten (41) und des zweiten (42) Kontaktpaars ein männliches Kontaktelement (411, 421) und ein weibliches Kontaktelement (412, 422) mit einem Hohlraum, in den das männliche Element (411, 421) einsetzbar ist, aufweist und Gleitkontakte (51, 52, 53, 54) aufweist, die an der Grenzfläche zwischen dem männlichen (411, 421) und dem weiblichen (412, 422) Kontaktelement positioniert sind, wobei die Außenfläche (400) des weiblichen Kontaktelements (412, 422) lineare und gekrümmte Abschnitte ohne jegliche scharfe Kante aufweist und in Bezug auf eine Längsmittelachse symmetrisch ist.

2. Elektrische Schaltanlage (100) nach Anspruch 1, **dadurch gekennzeichnet, dass** das männliche Kontaktelement (411, 421) einen zylindrischen Körper umfasst und das weibliche Kontaktelement (412, 422) einen zylindrischen Hohlraum umfasst, in den der zylindrische Körper einsetzbar ist.

3. Elektrische Schaltanlage (100) nach Anspruch 1 oder 2, **dadurch gekennzeichnet, dass** der Hohlraum des weiblichen Kontaktelements (412, 422) einen oder mehrere Schlitze (450) auf seiner Innenfläche (451) umfasst, in denen die Gleitkontakte (51, 52, 53, 54) positioniert sind.

4. Elektrische Schaltanlage (100) nach einem oder mehreren der vorhergehenden Ansprüche, **dadurch gekennzeichnet, dass** das männliche Kontaktelement (411, 421) einen oder mehrere Schlitze (461) auf seiner Außenfläche (460) umfasst, in denen die Gleitkontakte (51, 52, 53, 54) positioniert sind.

5. Elektrische Schaltanlage (100) nach Anspruch 3 oder 4, **dadurch gekennzeichnet, dass** bei jedem Kontaktpaar (41, 42) das männliche Kontaktelement (411, 421) und/oder das weibliche Kontaktelement (412, 422) eine Vielzahl von Schlitzen (450) umfasst, in denen eine entsprechende Vielzahl von Gleitkontakten (51, 52, 53, 54) positioniert ist.

6. Elektrische Schaltanlage (100) nach einem oder mehreren der vorhergehenden Ansprüche, **dadurch gekennzeichnet, dass** das dritte, dazwischenliegende Kontaktelement (13, 23, 33) eine einteilige längliche Hülse (130, 230, 330) aus leitfähigem Material mit einem zylindrischen Hohlraum (131, 231, 331) umfasst, und dadurch, dass jedes des ersten (11, 21) und des zweiten (12, 22) Kontaktelements einen zylindrischen Körper umfasst, der in den zylindrischen Hohlraum (130, 230, 330) einsetzbar ist, wobei das erste Kontaktpaar (41) durch das dritte, dazwischenliegende Kontaktelement (13, 23, 33) und den zylindrischen Körper des ersten Kontaktelements (11, 21) an einem ersten Ende der einteiligen länglichen Hülse (130, 230, 330) gebildet ist, wobei das zweite Kontaktpaar (42) durch das dritte, dazwischenliegende Kontaktelement (13, 23, 33) und den zylindrischen Körper des zweiten Kontaktelements (12, 22) an einem zweiten Ende der einteiligen länglichen Hülse (130, 230, 330) gebildet ist.

7. Elektrische Schaltanlage (100) nach einem oder mehreren der Ansprüche 1-5, **dadurch gekennzeichnet, dass** das dritte, dazwischenliegende Kontaktelement einen einteiligen länglichen zylindrischen Körper umfasst, und dadurch, dass jedes des ersten und des zweiten Kontaktelements ein weibliches Kontaktelement mit einem Hohlraum umfasst, in den ein Abschnitt des einteiligen länglichen zylindrischen Körpers einsetzbar ist, wobei das erste Kontaktpaar (41) durch das dritte, dazwischenliegende Kontaktelement und das weibliche Kontaktelement des ersten Kontaktelements an einem ersten Ende des einteiligen länglichen zylindrischen Körpers gebildet ist, wobei das zweite Kontaktpaar (42) durch das dritte, dazwischenliegende Kontaktelement und das weibliche Kontaktelement des zweiten Kontaktelements an einem zweiten Ende des einteiligen länglichen zylindrischen Körpers gebildet ist.

8. Elektrische Schaltanlage (100) nach einem oder mehreren der vorhergehenden Ansprüche, **dadurch gekennzeichnet, dass** das dritte, dazwischenliegende Kontaktelement (13, 23, 33) dazu geeignet ist, sich in Bezug auf die Längsachse leicht zu biegen, um eine mögliche Fehlausrichtung zwischen dem ersten (11, 21) und dem zweiten (12, 22) Kontaktelement auszugleichen.

9. Elektrische Schaltanlage (100) nach einem oder mehreren der vorhergehenden Ansprüche, **dadurch gekennzeichnet, dass** die Gleitkontakte (51, 52, 53, 54) in einer Richtung senkrecht zur Längsachse komprimierbar sind, um eine mögliche Fehlausrichtung zwischen dem ersten (11, 21) und dem zweiten (12, 22) Kontaktelement auszugleichen.

10. Elektrische Schaltanlage (100) nach einem oder mehreren der vorhergehenden Ansprüche, **dadurch gekennzeichnet, dass** die Gleitkontakte (51, 52, 53, 54) Baumann-Kontaktfedern oder Mehrfachkontaktbänder sind.

11. Elektrische Schaltanlage (100) nach einem oder mehreren der vorhergehenden Ansprüche, **dadurch gekennzeichnet, dass** die Außenfläche (400) des weiblichen Elements (412, 422) mit einer isolierten Beschichtung beschichtet ist.

## Revendications

1. Appareil de commutation électrique (100) comprenant un disjoncteur (101) mobile entre une position déconnectée retirée, et une position connectée de service, dans lequel ledit disjoncteur (101) comprend, pour chaque phase, une première borne de connexion (102) pouvant être couplée à/découplée d'une seconde borne de connexion fixe correspondante (103) dudit appareil de commutation (100), l'appareil de commutation électrique comprenant en outre
un ensemble de connexion électrique (1, 10, 20) qui comprend un premier élément de contact (11, 21) relié électriquement et mécaniquement à ladite première borne de connexion (102) dudit disjoncteur (101), un deuxième élément de contact (12, 22) relié électriquement et mécaniquement à ladite seconde borne de connexion fixe (103) dudit appareil de commutation (100), et un troisième élément de contact intermédiaire (13, 23, 33), **caractérisé en ce que** le troisième élément de contact intermédiaire (13, 23, 33) comprend
un corps allongé monobloc, relié électriquement et mécaniquement à l'un desdits premier (11, 21) et deuxième (12, 22) éléments de contact et pouvant être couplé à/découplé électriquement et mécaniquement de l'autre desdits premier (11, 21) et deuxième (12, 22) éléments de contact, et en outre **caractérisé en ce que** lesdits premier (11, 21) et deuxième (12, 22) éléments de contact forment respectivement une première (41) et une seconde (42) paire de contact avec une partie dudit troisième élément de contact intermédiaire (13, 23, 33), chacune desdites première (41) et seconde (42) paires de contact ayant un élément de contact mâle (411, 421) et un élément de contact femelle (412, 422) ayant une cavité creuse dans laquelle ledit élément mâle (411, 421) peut être inséré, et ayant des contacts glissants (51, 52, 53, 54) positionnés à l'interface entre lesdits éléments de contact mâle (411, 421) et femelle (412, 422), la surface externe (400) dudit élément de contact femelle (412, 422) présentant des parties linéaires et courbes dépourvues de toute arête vive et symétriques par rapport à un axe longitudinal central.

2. Appareil de commutation électrique (100) selon la revendication 1, **caractérisé en ce que** ledit élément de contact mâle (411, 421) comprend un corps cylindrique et ledit élément de contact femelle (412, 422) comprend une cavité creuse cylindrique dans laquelle ledit corps cylindrique peut être inséré.

3. Appareil de commutation électrique (100) selon la revendication 1 ou 2, **caractérisé en ce que** ladite cavité creuse dudit élément de contact femelle (412, 422) comprend une ou plusieurs fentes (450) sur sa surface interne (451) dans lesquelles lesdits contacts glissants (51, 52, 53, 54) sont positionnés.

4. Appareil de commutation électrique (100) selon une ou plusieurs des revendications précédentes, **caractérisé en ce que** ledit élément de contact mâle (411, 421) comprend une ou plusieurs fentes (461) sur sa surface externe (460) dans lesquelles lesdits contacts glissants (51, 52, 53, 54) sont positionnés.

5. Appareil de commutation électrique (100) selon la revendication 3 ou 4, **caractérisé en ce que**, pour chaque paire de contacts (41, 42), ledit élément de contact mâle (411, 421) et/ou ledit élément de contact femelle (412, 422) comprend une pluralité de fentes (450) dans lesquelles une pluralité correspondante de contacts glissants (51, 52, 53, 54) sont positionnés.

6. Appareil de commutation électrique (100) selon une ou plusieurs des revendications précédentes, **caractérisé en ce que** ledit troisième élément de contact intermédiaire (13, 23, 33) comprend un manchon allongé monobloc (130, 230, 330) fait d'un matériau conducteur ayant une cavité creuse cylindrique (131, 231, 331), et **en ce que** chacun desdits premier (11, 21) et deuxième (12, 22) éléments de contact comprend un corps cylindrique pouvant être inséré dans ladite cavité cylindrique (130, 230, 330), ladite première paire de contact (41) étant formée par ledit troisième élément de contact intermédiaire (13, 23, 33) et le corps cylindrique dudit premier élément de contact (11, 21) à une première extrémité dudit manchon allongé monobloc (130, 230, 330), ladite seconde paire de contact (42) étant formée par ledit troisième élément de contact intermédiaire (13, 23, 33) et le corps cylindrique dudit deuxième élément de contact (12, 22) à une seconde extrémité dudit manchon allongé monobloc (130, 230, 330).

7. Appareil de commutation électrique (100) selon une ou plusieurs des revendications 1 à 5, **caractérisé en ce que** ledit troisième élément de contact intermédiaire comprend un corps cylindrique allongé monobloc, et **en ce que** chacun desdits premier et deuxième éléments de contact comprend un élément de contact femelle ayant une cavité creuse dans laquelle une partie dudit corps cylindrique allongé monobloc peut être insérée, ladite première paire de contacts (41) étant formée par ledit troisième élément de contact intermédiaire et l'élément de contact femelle dudit premier élément de contact à une première extrémité dudit corps cylindrique allongé monobloc, ladite seconde paire de contact (42) étant formée par ledit troisième élément de contact intermédiaire et l'élément de contact femelle dudit deuxième élément de contact à une seconde extrémité dudit corps cylindrique allongé monobloc.

8. Appareil de commutation électrique (100) selon une ou plusieurs des revendications précédentes, **caractérisé en ce que** ledit troisième élément de contact intermédiaire (13, 23, 33) est conçu pour se courber légèrement par rapport audit axe longitudinal pour compenser un éventuel désalignement entre lesdits premier (11, 21) et deuxième (12, 22) éléments de contact.

9. Appareil de commutation électrique (100) selon une ou plusieurs des revendications précédentes, **caractérisé en ce que** lesdits contacts glissants (51, 52, 53, 54) peuvent être compressés dans une direction perpendiculaire audit axe longitudinal pour compenser un éventuel désalignement entre lesdits premier (11, 21) et second (12, 22) éléments de contact.

10. Appareil de commutation électrique (100) selon une ou plusieurs des revendications précédentes, **caractérisé en ce que** lesdits contacts glissants (51, 52, 53, 54) sont des ressorts de contact Baumann ou des bandes à contacts multiples.

11. Appareil de commutation électrique (100) selon une ou plusieurs des revendications précédentes, **caractérisé en ce que** la surface externe (400) dudit élément femelle (412, 422) est revêtue d'un revêtement isolé.
